# EUROPEAN PATENT APPLICATION

(11) **EP 1 094 261 A2**
(43) Date of publication of application: **25.04.2001**
(21) Application number: 00308719.4
(22) Date of filing: 04.10.2000
(51) Int. Cl.: F16K 31/06, F16K 27/00, F15B 13/08, F15B 13/043

(54) **Solenoid valve**

(30) Priority: 18.10.1999 JP 29596799
(71) Applicant: SMC CORPORATION, Minato-ku, Tokyo (JP)
(72) Inventor: Sato, Hideharu, c/o SMC Corp. Tsukuba Tech. Center, Tsukuba-gun, Ibaraki (JP); Matsumoto, Takumi, c/o SMC Corp. Tsukuba Tech. Ctr, Tsukuba-gun, Ibaraki (JP)
(74) Representative: Findlay, Alice Rosemary

(57) **Abstract**

A solenoid valve is provided in which a main valve section and a solenoid section are simply and tightly connected together by a simple connecting means without screws. A solenoid assembly 2 of the solenoid valve has at least a pair of hooks 47 formed therein, and a main valve section assembly 1 has a plurality of hook inserting holes 48 into which the hooks are fitted, respectively, and a C-shaped metal inserting hole 50 into which a C-shaped metallic fixture 3 is inserted formed in a casing 5 thereof. In addition, the metallic fixture 3 has engaging sections 51 that engage in the hooks 47 at tips of the two side plate sections 3a and also has contact sections 53 formed at a bottom plate section 3b thereof. The contact sections 53 come into pressure contact with metallic fixture retainers 52 formed at a bottom hole section 50b of the metallic fixture inserting hole 50. By inserting the metallic fixture 3 into the metallic fixture inserting hole 50, locking the engaging sections 51 with the hooks 47, and also bringing the contact sections 53 into pressure contact with the metallic fixture retainers 52, the main valve section assembly 1 and the solenoid assembly 2 are connected together with the metallic fixture 3.

## Description

The present invention relates to a solenoid valve for performing opening and closing operations of a valve member by means of a solenoid, and more specifically, relates to a solenoid valve in which a main valve section and a solenoid section can be tightly connected to each other by a simple connecting means without screws.

Known solenoid valves generally comprise a main valve section and a solenoid section. The main valve section has a plurality of ports, at least one valve seat located in a channel connecting the ports to each other, and valve members for opening and closing the valve seats and the solenoid section has a moving iron core for opening and closing the valve members and a magnetic means for driving the moving iron core. The main valve section and the solenoid section are individually assembled and then connected using a plurality of screws.

However, the method of connecting the main valve section and the solenoid section using the plurality of screws means that the main valve section and the solenoid section must each provide areas for boring a plurality of screw holes at corresponding locations which requires a casing of larger size, resulting in a larger solenoid. In addition, the plurality of screws must be attached or detached when assembling or dissembling, which is troublesome.

It is an object of the present invention to easily and tightly connect a main valve section and a solenoid section of a solenoid valve, to each other by a simple connecting means, without screws.

A solenoid valve according to the present invention comprises: a main valve section assembly having a plurality of ports in a casing, at least one valve seat located at a channel connecting the ports together, and valve members for opening and closing the valve seats; a solenoid assembly having a moving iron core for opening and closing the valve members and a magnetic means for driving the moving iron core; and a metallic fixture for integrally connecting the main valve section assembly and the solenoid assembly, wherein the solenoid assembly has at least one pair of hooks at corresponding positions on a joining surface corresponding to the main valve section assembly; the casing of the main valve section assembly has a plurality of hook inserting holes into which the hooks are each fitted on a joining surface corresponding to the solenoid assembly, and also has a C-shaped metallic fixture inserting hole for inserting the metallic fixture arranged on a side thereof so as to be aligned with the hook inserting holes; the metallic fixture has a generally C-shaped cross section and includes two side-plate sections facing each other and a bottom plate section connecting ends of the side plate sections together, wherein tips of the two side plate sections each have an engaging section that engages the hooks, and the bottom plate section has contact sections coming into pressure contact with metallic fixture retainers formed at a bottom hole section of the metallic fixture inserting hole. By inserting the metallic fixture into the metallic fixture inserting hole, locking the engaging sections to the hooks, and bringing the contact sections into pressure contact with the metallic fixture retainers, the main valve section assembly and the solenoid assembly are integrally connected by the use of the metallic fixture.

With the solenoid valve of the present invention, since the main valve section assembly and the solenoid assembly can be tightly connected together only by the use of the metallic fixture and there is no need to use screws as in conventional solenoid valves, assembly and disassembly for maintenance or the like can be remarkably simplified.

In one embodiment, the magnetic means of the solenoid assembly has a C-shaped magnetic frame and has the hooks integrally formed at the tip portions of the two facing side-frame sections of the magnetic frame. In this case, the magnetic frame can have a pair of hooks formed at each of the two side-frame sections.

Thus, not only is a simple construction for mounting the hooks provided as compared with the case of individually mounting the connecting hooks, but also the mounting strength is greatly increased so that even if a large tensile load is applied to the hooks, the hooks do not fall out from the solenoid assembly.

In another embodiment, the main valve section assembly has a spring washer for supporting a restoring valve spring for urging the valve member, and the spring washer is disposed at a position crossing over the bottom hole section of the metallic fixture inserting hole. The metallic fixture has a generally U-shaped notch for fitting and locking the spring washer in the bottom plate section, and acts as a spring washer retainer for retaining the spring washer at the mounting position.

According to another embodiment, the main valve section assembly has bolt fixing holes arranged in the vicinity of the two side-hole sections of the metallic fixture inserting hole and seating surfaces with which bolt heads come into pressure contact at positions overlapping the side hole sections, wherein the metallic fixture is formed of a rigid metallic material and edges of the side plate sections of the metallic fixture are made the same height as the seating surfaces to form part of the seating surfaces with the edges of the side plate sections.

By forming part of the seating surfaces with the metallic fixture and making this of rigid metallic material, deformation of the seating surfaces, when the bolts are strongly tightened and also loosening of the bolts with deformation can be prevented.

The invention will now be further described by way of example with reference to the accompanying drawings in which:
Fig. 1 is a cross-sectional view of a solenoid valve according to the present invention;
Fig. 2 is a right-side elevational view of Fig. 1 with sections broken away;

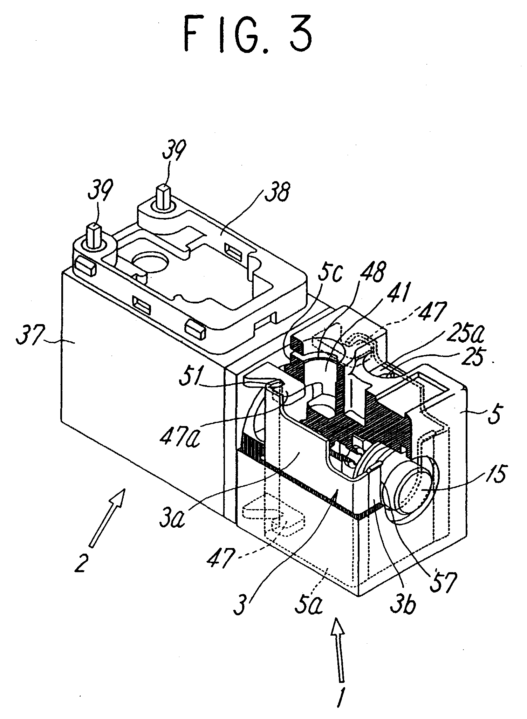

Fig. 3 is a perspective view of the solenoid valve in Fig. 1;
Fig. 4 is an exploded view of Fig. 3;
Fig. 5 is a perspective view showing a second embodiment of a metallic fixture; and
Fig. 6 is a perspective view showing a third embodiment of the metallic fixture.

The drawings show a preferred embodiment of a solenoid valve comprising a main valve section assembly 1, a solenoid assembly 2, and a generally C-shaped metallic fixture 3 for connecting them.

The main valve section assembly 1 has a casing 5 made of a non-magnetic material formed by means of casting or the like, and a first side 5a of the casing 5 has an input port P connected to a supply source of compressed air, an output port A connected to an actuator such as an air cylinder, and an exhaust port R for exhausting air to the exterior.

In the casing 5, there is provided a supply valve seat 7 at a channel connecting the input port P with the output port A through a channel hole 6 and an exhaust valve seat 8 at a channel connecting the output port A with the exhaust port R in a direction opposite to each other on a common axis.

In a supply valve chamber 10 in which the supply valve seat 7 is opened, there is provided a supply valve member 11 for opening and closing the supply valve seat 7 in a state retained by a moving iron core 12 of the solenoid assembly 2. In addition, in an exhaust valve chamber 13 in which the exhaust valve seat 8 is opened, there is provided an exhaust valve member 14 for opening and closing the exhaust valve seat 8 in a state urged in a direction of closing the exhaust valve seat 8 by the use of a restoring valve spring 16 contractedly interposed between a spring washer 15. In the drawings, reference numeral 17 denotes a sealing member attached to an outer periphery of the spring washer 15.

The channel hole 6 has a push rod 20 inserted therein in such a way as not to prevent venting of compressed air. A lower end of the push rod 20 is integrated with a cap-shaped valve holder 21 mounted to the exhaust valve member 14, while an upper end of the push rod 20 comes into contact with a lower surface of a cap 22 attached to a lower end of the moving iron core 12 in the solenoid assembly 2. When the moving iron core 12 moves downward so that the supply valve member 11 closes the supply valve seat 7, the push rod 20 is pushed down by the moving iron core 12 to push down the exhaust valve member 14, thereby opening the exhaust valve seat 8. On the other hand, when the moving iron core 12 moves upward and the supply valve member 11 opens the supply valve seat 7, the push rod 20 is pushed up by the urging force of the valve spring by releasing the pressure of the exhaust valve member 14, thereby closing the exhaust valve seat 8 with the exhaust valve member 14.

In addition, two fixing holes 25 and 25 are provided for fixing the solenoid valve to a conduit or the like with bolts at positions near the right and left opposite end portions between the first side 5a and the opposite second side 5b in the casing 5. At least the second side 5b of the fixing holes 25 has a seating surface 25a formed at the end portion thereof by a counter boring process.

The solenoid assembly 2 includes: a coil 28 wound around a bobbin 27; a C-shaped magnetic frame 29 surrounding the coil 28; a magnetic plate 30 disposed between tip portions of right and left side frame sections 29a and 29a of the magnetic frame 29; a fixed iron core 32 that is air-tightly fixed to one end of an iron core hole 31 located at a center of the bobbin 27 and magnetically connected to the magnetic frame 29 by coming into contact therewith; the moving iron core 12 slidably inserted to another side of the iron core hole 31 and in which a tip is projected into the supply valve chamber 10 through a hole of the magnetic plate 30; and a restoring spring 33 for urging the moving iron core 12 in a direction away from the fixed iron core 32.

The moving iron core 12 has a hollow on a lower end surface thereof and houses in the hollow the supply valve member 11 and a valve spring 36 for urging the supply valve member 11 toward the outside of the hollow. In addition, in order to prevent the supply valve member 11 from protruding from the hollow, the moving iron core 12 has the cap 22 made of an elastic material such as synthetic resin mounted at a small diameter portion at a lower end of the moving iron core 12.

The outer surface of the solenoid assembly 2 is coated with a sealing material 37 made of synthetic resin and has a terminal block 38 attached to the side thereof, from which a power-receiving terminal 39 connecting to the coil 28 is projected.

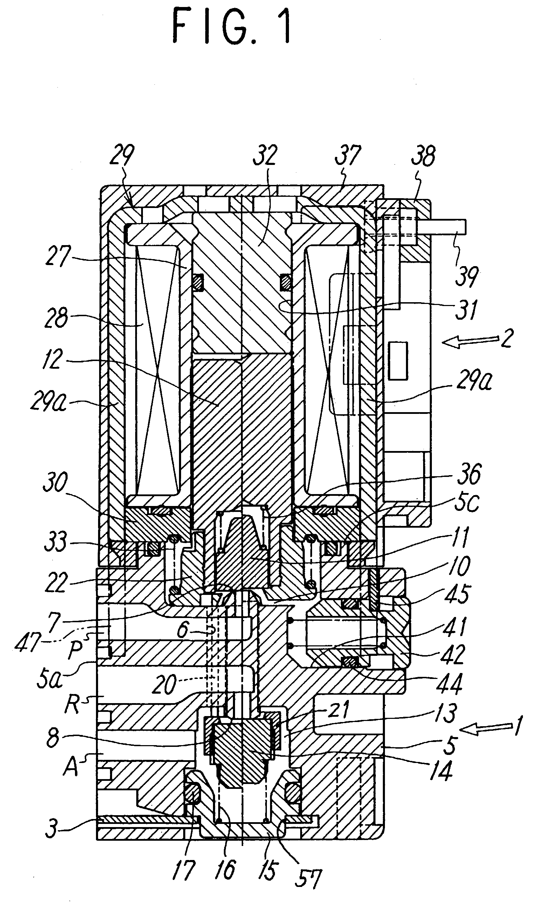

In the solenoid valve, when the coil 28 is not energized, the moving iron core 12 is separated from the fixed iron core 32 as shown in the left half section of Fig. 1, and the supply valve member 11 closes the supply valve seat 7 by an urging force of the valve spring 36, while the exhaust valve member 14 pressed by the push rod 20 opens the exhaust valve seat 8 so that the output port A and the exhaust port R are connected together.

When the coil 28 is energized, as shown in the right half section in Fig. 1, the moving iron core 12 resists the urging force of the restoring spring 33 to be stuck to the fixed iron core 32, and the supply valve member 11 opens the supply valve seat 7, while the exhaust valve member 14 closes the exhaust valve seat 8 by the urging force of the valve spring 36 so that the input port P and the output port A are connected together.

The casing 5 of the main valve section assembly 1 has a valve hole 41 provided at an upper central position of the second side 5b, and has a manual operation button 42 provided in the valve hole 41. During a power failure or the like, the moving iron core 12 is moved backward and a switching operation of the solenoid valve can be manually performed by pressing the manual operation button 42. In the drawings, reference numeral 43 denotes a restoring spring for urging the manual operation button 42 in a restoring direction, 44 denotes a sealing material, and 45 denotes a stopper for specifying an operating range of the manual operation button 42.

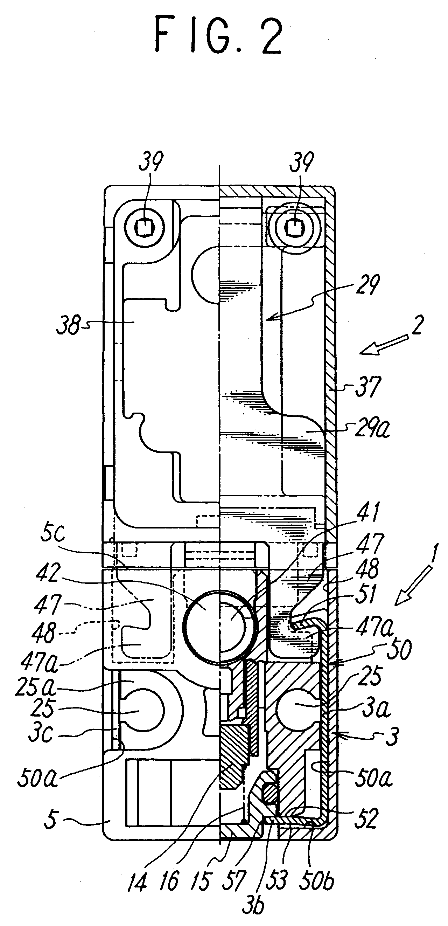

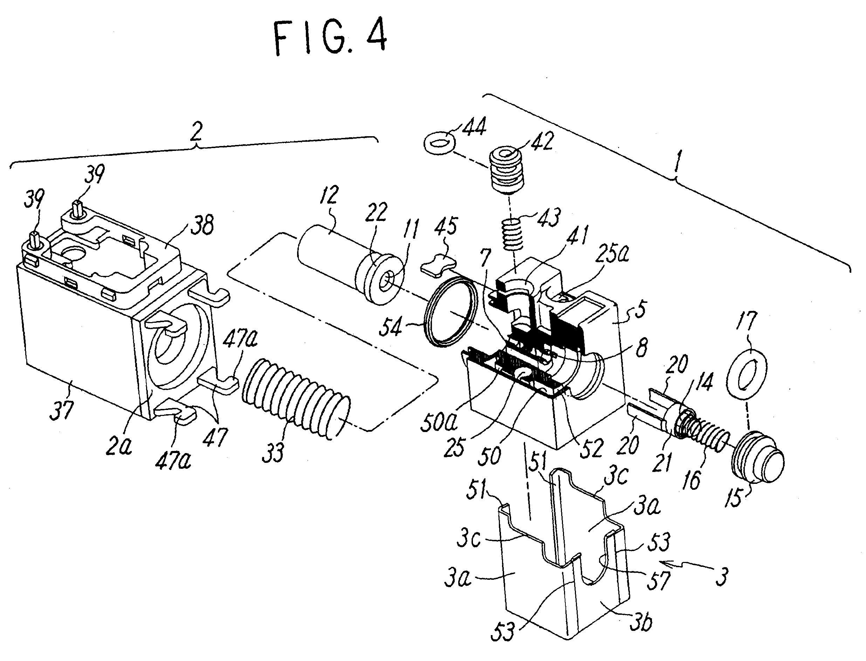

In order to connect the main valve section assembly 1 and the solenoid assembly 2 to each other with the metallic fixture 3, they are constructed as follows. First, as shown in Fig. 4, the solenoid assembly 2 has two pairs of hooks 47 protruded from positions facing each other at four corners on a joining surface 2a that joins the main valve section assembly 1, the hooks each having locking claws 47a each extending in a reverse direction from each other. The hooks 47 and 47 are constructed, as shown in Fig. 2, by providing the tip portions of the two side-frame sections 29a and 29a facing each other of the magnetic frame 29 with a pair of extending portions, respectively, and by forming the locking claws 47a at the extending portions, respectively.

As described above, by integrally forming the hook 47 with the magnetic frame 29, the construction for installation is simplified as compared with the case of having them individually, and also the connecting strength is extremely increased so that even if a strong tensile load is exerted on the hooks 47 upon connection, the hooks 47 do not easily drop off from the solenoid assembly 2.

In contrast, the main valve section assembly 1 has four hook-inserting holes 48 into which the hooks 47 are fixed at four corners of a joining surface 5c of the casing 5, corresponding to the solenoid assembly 2. In addition, the casing 5 has a C-shaped metal inserting hole 50 provided at the first side 5a thereof, into which the metallic fixture 3 is inserted, in a manner such that the metal inserting hole 50 has a depth lined with the hook inserting holes 48 in a state where right and left side hole sections 50a and 50a are unevenly distributed to the right and left end portions of the first side 5a, and are overlapped with the seating surface 25a at a position near the fixing hole 25, and a bottom-hole section 50b is located at a position near a bottom portion of the first side 5a.

Furthermore, as shown in Fig. 4, the metallic fixture 3 is formed to have a generally C-shape by the use of a rigid metal plate and preferably appropriate elasticity, and has two side-plate sections 3a and 3a facing each other and a bottom plate section 3b connecting end portions of the side plate sections 3a and 3a together. At each of the tips of the two side-plate sections 3a and 3a, an engaging section 51 that engages with the locking claw 47a of the hook 47 is formed by means of a bending process, and a tip of the engaging section 51 is slightly inclined toward the bottom plate section 3b. In addition, contact sections 53 are formed at the bottom plate section 3b in a state slightly curved toward the inside, the contact sections 53 coming into pressure contact with metallic fixture retainers 52 formed at the bottom hole section 50b of the metallic fixture inserting hole 50.

By inserting the metallic fixture 3 into the metallic fixture inserting hole 50, locking the engaging sections 51 into the hooks 47, and bringing the contact sections 53 into pressure contact with the metallic fixture retainers 52, the solenoid assembly 2 is drawn close to the main valve section assembly 1 by the use of the metallic fixture 3, thereby integrally connecting the main valve section assembly 1 and the solenoid assembly 2 to each other. In the drawings, reference numeral 54 indicates a sealing material interposed between the joining surface 5a of the main valve section assembly 1 and the joining surface 2a of the solenoid assembly 2.

In this instance, the metallic fixture 3 has a generally U-shaped notch 57 formed at the bottom plate section 3b thereof and the notch 57 is fitted and locked in the spring washer 15 mounted at a position crossing over the bottom hole section 50b of the metallic fixture inserting hole 50 in order to retain the spring washer 15 at the mounting position.

Furthermore, upper edges 3c of the side plate sections 3a and 3a of the metallic fixture 3 are located at positions of the seating surfaces 25a of the fixing holes 25 to be made the same height as the seating surfaces 25a to construct part of the seating surfaces 25a with the upper edge 3c. In this manner, the rigid metallic fixture 3 is used to form part of the seating surfaces 25a so that deformation of the seating surfaces can be prevented when bolts are strongly tightened and so that loosening of bolts arising from deformation can be also prevented.

Accordingly, by connecting the main valve section assembly 1 and the solenoid assembly 2 together with the metallic fixture 3, assembly work or disassembly work for maintenance is remarkably simplified and there is no need to provide a plurality of screw holes, so that the solenoid valve can be made smaller.

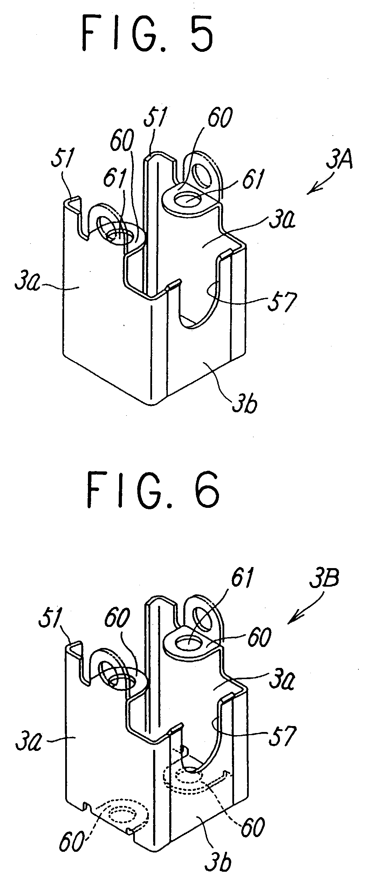

Fig. 5 and Fig. 6 show a second and a third embodiment of the metallic fixture 3, respectively. A metallic fixture 3A of the second embodiment, as shown in Fig. 6, has seating plates 60 having bolt holes 61 at the edges of the side plate sections 3a and 3a corresponding to the seating surfaces 25a of the casing 5, and is constructed in a manner such that the seating plates 60 are bent and overlapped over the seating surfaces 25a. A metallic fixture 3B of the third embodiment, as shown in Fig. 5, is used in the case where the seating surface 25a is also provided at a first surface of the casing 5, and is constructed in a manner such that the seating plates 60 similar to those of the second embodiment are provided at opposite ends of the side plate sections 3a and 3a and are bent and overlapped with the seating surfaces 25a.

According to the present invention as described above, since the main valve section assembly and the solenoid assembly can be tightly connected together with only the metallic fixture so that there is no need to use screws as in the conventional solenoid valve, the assembly work or disassembly work for maintenance are remarkably simplified.

## Claims

1. A solenoid valve comprising a main valve section assembly (1) having a plurality of ports (P, A, R) in a casing (5), at least one valve seat (7, 8) located in a channel connecting the ports together, and at least one valve member (11, 14) for opening and closing the valve seat (7, 8), a solenoid assembly (2) having a moving iron core (12) for opening and closing the valve members (11, 14) and a magnetic means for driving the moving iron core (12), and a metallic fixture (3) for connecting the main valve section assembly (1) and the solenoid assembly (2) together with a surface of each adjoining, wherein the solenoid assembly (2) has at least a pair of hooks (47) on the joining surface (2a) thereof and the casing of the main valve section assembly (1) has hook inserting holes (48) into which the hooks (47) are fitted on the joining surface (5c) thereof and a C-shaped metallic fixture inserting hole (50) in which the metallic fixture (3) is inserted at a side of the casing, wherein the metallic fixture (3) has a generally C-shaped cross section, and includes two side plate sections (3a) and a bottom plate section (3b) connecting one end of the side plate sections (3a) together, and wherein the two side plate sections (3a) each have a hook engaging section (51) at the other end that engages in one of the pair of hooks (47) when the hooks (47) and metallic fixture (3) are inserted in the hook inserting holes (48) and the fixture inserting hole (50), respectively, of the casing (5).

2. A solenoid valve as claimed in Claim 1 wherein the bottom plate section (3b) has contact sections (53) that come into pressure contact with metallic fixture retainers (52) formed at a bottom hole section (50b) of the metallic fixture inserting hole (50).

3. A solenoid valve as claimed in either Claim 1 or Claim 2 wherein the magnetic means has a C-shaped magnetic frame (29) formed from two side frame sections (29a) which each have at least one of the hooks (47) formed at an end thereof.

4. A solenoid valve as claimed in Claim 3, wherein the two side frame sections (29a) of the magnetic frame (29) each have a pair of hooks (47).

5. A solenoid valve as claimed in any preceding Claim wherein the main valve section assembly (1) has a spring washer (15) for supporting a restoring valve spring (16) that acts on the valve member (14), wherein the spring washer (15) is disposed at a position crossing a bottom hole section (50b) of the metallic fixture inserting hole (50), and wherein the metallic fixture (3) has a generally U-shaped notch (57) in the bottom plate section (3b) into which the spring washer (15) is fitted and locked and so serves as a spring washer retainer for retaining the spring washer (15).

6. A solenoid valve as claimed in any preceding Claim wherein the main valve section assembly (1) has bolt fixing holes (25) in proximity to two side hole sections (50a) of the metallic fixture inserting hole (50) at opposite sides thereof and seating surfaces (25a) with which heads of bolts in the holes (25) come in pressure contact overlapping the side hole sections (50a), and wherein the metallic fixture (3) is formed of a rigid metallic material and edges of the side-plate sections (3a) of the metallic fixture (3) form part of the seating surfaces (25a).
